# EUROPÄISCHE PATENTANMELDUNG

(11) **EP 2 557 245 A1**
(43) Veröffentlichungstag der Anmeldung: **13.02.2013**
(21) Anmeldenummer: 11405299.6
(22) Anmeldetag: 12.08.2011
(51) Int. Cl.: E04B 1/76, E04F 13/08

(54) **Befestigungsvorrichtung, Wärmedämmkörper, Wärmedämmverbundsystem, Gebäude und Verfahren zum Erstellen eines Wärmedämmverbundsystems**

(71) Anmelder: Plozner, Fabrizio, 8032 Zürich (CH)
(72) Erfinder: Plozner, Fabrizio, 8032 Zürich (CH)
(74) Vertreter: EGLI-EUROPEAN PATENT ATTORNEYS

(57) **Zusammenfassung**

Befestigungsvorrichtung (10) zum Befestigen von Wärmedämmkörpern an einer Aussenwand eines Gebäudes, mit einer Fixierplatte (12) zum Fixieren der Befestigungsvorrichtung (10) an der Aussenwand; einer Einsteckplatte (14), welche über einen Verbindungssteg (16) in einer Ebene im Wesentlichen parallel zur Fixierplatte (12) an dieser befestigt ist, wobei zumindest ein erster Abschnitt von der Einsteckplatte (14) zur relativen Ineingriffnahme in einen der Dicke von der Einsteckplatte (14) im Wesentlichen korrespondierenden ersten Schlitz von zumindest einem ersten der Wärmedämmkörper ausgebildet ist. Der Verbindungssteg (16) ist zur relativen Ineingriffnahme in eine korrespondierende Ausnehmung des zumindest einen ersten Wärmedämmkörpers ausgebildet.

## Beschreibung

Die Erfindung betrifft eine Befestigungsvorrichtung gemäss Oberbegriff von Anspruch 1. Die Erfindung betrifft ferner einen Wärmedämmkörper nach Anspruch 18, ein Wärmedämmverbundsystem nach Anspruch 20, ein Gebäude nach Anspruch 25 und ein Verfahren zum Erstellen eines Wärmedämmverbundsystems nach Anspruch 26.

Es sind Wärmedämmverbundsysteme bekannt, bei welchen eine Mehrzahl von Wärmedämmkörpern, nebeneinander und übereinander angeordnet, an einer Aussenwand von einem Gebäude befestigt werden. Die Befestigung erfolgt mit Hilfe von Kleber und/oder Dübel, beispielsweise Thermo-Isolierdübel, auf dem bestehenden Untergrund der Aussenwand, beispielsweise Ziegel, Kalksandstein oder Beton. Die nach aussen gerichtete Fläche des Wärmedämmverbundsystems wird anschliessend mit einer Armierungsschicht versehen. Die Armierungsschicht besteht aus einem Armierungsmörtel, in dem ein Armierungsgewebe eingebettet wird. Das Armierungsgewebe ist im oberen Drittel der Armierungsschicht angeordnet. Den Abschluss des Systems bildet ein Aussenputz.

Es zeigt sich als nachteilig, dass das Verkleben der einzelnen Wärmedämmkörper sehr zeitaufwendig ist. Zudem muss die Aussenwand im Wesentlichen frei von Unebenheiten sein. Ein weiterer Nachteil besteht darin, dass ein fehlerhaft verklebter Wärmedämmkörper nicht mehr zerstörungsfrei von der Aussenwand entnommen werden kann.

Die Befestigung der einzelnen Wärmedämmkörper muss zudem sehr zuverlässig erfolgen, damit das Wärmedämmverbundsystem auch starken Windsoglasten widerstehen kann. Hierzu werden meist zusätzlich sogenannte Thermo-Isolierdübel durch die einzelnen Wärmedämmkörper und dann zur Fixierung in jeweils zuvor in die Aussenwand gebohrte Löcher eingeschlagen. Der zumeist tellerförmige Befestigungskopf dieser Thermo-Isolierdübel kommt nach dem Einschlagen auf der Aussenseite der Wärmedämmkörper zur Auflage.

Nachteilig hieran ist, dass über die Thermo-Isolierdübel jeweils Kältebrücken entstehen, welche die Wärmeisolationseigenschaft des Wärmedämmverbundsystems mindern. Ein weiterer Nachteil liegt darin, dass die Thermo-Isolierdübel sehr tief in das Mauerwerk der Aussenwand des Gebäudes eingeschlagen werden müssen, respektive sehr tiefe Löcher in das Mauerwerk gebohrt werden müssen. Diese Arbeit ist kraftaufwendig und zeitintensiv. Zudem wird hierdurch insbesondere bei Altbauten das Mauerwerk stark angegriffen. Ein weiterer Nachteil besteht darin, dass sich die tellerförmigen Befestigungsköpfe im Laufe der Zeit auf der fertigen Putzoberfläche abzeichnen. Nachteilig ist darüber hinaus, dass insbesondere am Randbereich von Gebäuden einer Traufhöhe von mehr als 20 m (aufgrund von dort zu erwartenden starken Windsoglasten) eine Verdübelung von 6 bis 10 Stück/m² erforderlich ist. Diese umfangreiche Arbeit der Verdübelung ist somit zeitaufwendig und insgesamt sehr teuer.

Es ist eine Technologie zum Befestigen von Wärmedämmkörpern mit Hilfe von Thermodübeln bekannt, bei welcher die Wärmedämmkörper an der jeweiligen Befestigungsstelle mit einer zumeist kreisrunden Ausnehmung versehen werden. Hierbei ist jeweils der Durchmesser dieser Ausnehmung grösser als der Durchmesser des Befestigungskopfes von einem jeweiligen Thermodübel. Der Thermodübel wird anschliessend derart tief in das Mauerwerk der Aussenwand des Gebäudes eingeschlagen, bis der Thermokopf gänzlich in die Ausnehmung eingebracht ist und an dem Material des Wärmedämmkörpers zum Anliegen kommt. Nachdem der Thermodübel eingebracht ist, wird die Aussparung mit einem passenden Abschlusselement, welches aus einem Material erstellt ist, welches dem Material des Wärmedämmkörper entspricht, in die Ausnehmung eingesetzt. Beispielsweise wird dieses Abschlusselement derart tief in die Aussparung eingesetzt, bis dessen Aussenfläche mit der Aussenfläche des Wärmedämmkörpers bündig abschliesst. Das Abschlusselement kann mit dem Wärmedämmkörper verklebt werden. Nachteilig hieran ist, dass die Aussparungen an Ort und Stelle in das Material des Wärmedämmkörpers eingebracht werden müssen. Diese Arbeit ist zeitintensiv. Ein weiterer Nachteil besteht darin, dass die wirksame Isolierdicke des Wärmedämmkörpers im Bereich der Aussparung zwangsläufig reduziert ist. Hierdurch wird die Isoliereigenschaft herabgesetzt.

Ein weiterer Nachteil der Befestigung der Wärmedämmkörper an die Aussenwand mittels Thermodübel aus dem Stand der Technik besteht darin, dass für Wärmedämmkörper unterschiedlicher Dicke auch unterschiedlich lange Thermodübel verwendet werden müssen. Somit müssen Thermodübel unterschiedlicher Länge hergestellt, auf Lager gehalten und angeboten werden, wodurch die Kosten insgesamt erhöht werden.

Eine weitere Technik zum Befestigen von Wärmedämmkörpern an Aussenwänden von Gebäuden besteht in der Verwendung von sogenannten Tragschienen. Die DE 299 11 643 U1 zeigt eine solche Tragschiene, welche als eine Winkelprofilschiene ausgebildet ist. Diese Schiene enthält einen Befestigungsschenkel zur Befestigung an einer Aussenwand. Ferner ist ein vom Befestigungsschenkel beabstandeter Halteschenkel zur Ineingriffnahme in einen Schlitz von einem Wärmedämmkörper bereitgestellt. Der Befestigungsschenkel und der Halteschenkel sind über ein Joch miteinander verbunden.

In Figur 1 dieser Druckschrift DE 299 11 643 U1 ist die Tragschiene an einer Aussenwand fixiert angezeigt. Es ist zu erkennen, dass der Befestigungsschenkel dazu ausgebildet ist, zugleich in die Schlitze von benachbarten Wärmedämmkörpern einzugreifen. Im montierten Zustand der Wärmedämmkörper an der Tragschiene sind erste Abschnitte der benachbarten Wärmedämmkörper, welche Abschnitte jeweils zwischen dem Schlitz und der zur Aussenwand gerichteten Fläche eines jeden Wärmedämmkörpers verlaufen, durch das Joch voneinander getrennt.

Es besteht ein Nachteil darin, dass zwischen zweiten Abschnitten der benachbarten Wärmedämmkörper, welche Abschnitte jeweils zwischen dem Schlitz und der von der Aussenwand abgewendeten Fläche eines jeden Wärmedämmkörpers verlaufen, ein Luftspalt gebildet ist. Die Breite dieses Luftspaltes, d.h. der Abstand zwischen den zuvor genannten zweiten Abschnitten von benachbarten Wärmedämmkörpern, entspricht hierbei der Dicke des Joches. Die Luftspalte zwischen jeweils benachbarten Wärmedämmkörpern bilden jeweils Kältebrücken. Als weiterhin nachteilig erweist es sich, dass die Isolierung zwischen den jeweils ersten Abschnitten der benachbarten Wärmedämmkörper lediglich durch das Material des Joches gebildet wird. Da das Material des Joches keine isolierenden Eigenschaften hat, kann von einer Isolierung keine Rede sein, so dass sich die Kältebrücke insgesamt über die gesamte Materialdicke der einzelnen Wärmedämmkörper erstreckt. Hierdurch wird die Wärmeisolationseigenschaft des gesamten Wärmedämmverbundsystems reduziert.

Es besteht ein weiteres Problem darin, dass eine jene Fixierung der Tragschiene an der Aussenwand, bei welcher Fixierung das Joch auch nur geringfügig von der horizontalen Ausrichtung abweicht, dazu führt, dass die Ausrichtung des hieran montierten Wärmedämmkörpers dieser Abweichung direkt folgt. Dies liegt darin begründet, dass das Joch mit seiner gesamten Fläche auf den jeweiligen Flächenbereichen der Oberseite und/oder Unterseite eines hieran montierten Wärmedämmkörpers aufliegt und diesen somit in Position drückt. Die Ausrichtung des Jochs gibt somit unweigerlich die Ausrichtung des jeweils montierten Wärmedämmkörpers vor. Über die Länge einer Aussenwand betrachtet, setzt sich diese Abweichung gehebelt über alle Wärmedämmkörper fort. Nachteilig hieran ist, dass Abweichungen von der horizontalen, respektive vertikalen Anordnung der Wärmedämmkörper zu erhöhten Spaltmassen zwischen benachbarten Wärmedämmkörpern führen, welches die Wärmeisolationseigenschaft herabsetzt. Um dieses Problem zu vermeiden, müssten wiederum die einzelnen Tragschienen mit sehr exakt horizontal ausgerichtetem Joch an der Aussenwand fixiert werden. Diese hierzu besonders präzise Arbeit ist jedoch sehr zeitintensiv und kann nur durch besonders geschultes Fachpersonal durchgeführt werden.

Es ist Aufgabe der vorliegenden Erfindung ein Wärmedämmverbundsystem zu schaffen, welches schnell und einfach zu montieren ist, kostengünstig ist und verbesserte Wärmeisolationseigenschaften bereitstellt.

Diese Aufgabe wird durch eine Befestigungsvorrichtung gemäss Patentanspruch 1 gelöst.

Erfindungsgemäss ist der Verbindungssteg zur relativen Ineingriffnahme in eine korrespondierende Ausnehmung des zumindest einen ersten Wärmedämmkörpers ausgebildet. Bei dem Bestreben die Wärmedämmkörper zueinander nahtlos anzufügen, erweist sich der Verbindungssteg somit als nicht störend. Durch diese verblüffend einfache Lösung wird der ganz wesentliche Vorteil geschaffen, dass benachbarte Wärmedämmkörper, beispielsweise übereinander angeordnete Wärmedämmkörper, im befestigten Zustand vollständig aneinander anliegen. Ohne einen jeglichen Zwischenspalt fügen sich die Isolationsmaterialien der Wärmedämmkörper nahtlos aneinander an und bilden somit einen grossflächigen und einheitlich geschlossenen Isolationskörper, welcher hervorragende Wärmeisolationseigenschaften bietet.

Ferner rufen geringe Abweichungen von der exakt horizontalen, respektive vertikalen Ausrichtung der Befestigungsvorrichtung bei deren Fixierung an der Aussenwand keine Abweichungen von der exakt horizontalen, respektive vertikalen Ausrichtung der Wärmedämmkörper hervor. Vielmehr ist nunmehr ein gegenseitiges Nachjustieren der einzelnen Wärmedämmkörper auch im montierten Zustand an der Befestigungsvorrichtung ermöglicht. Somit ist die Bildung von Spalten zwischen jeweiligen Wärmedämmkörpern ausgeschlossen. Hieraus erwächst ein weiterer Vorteil darin, dass die Befestigungsvorrichtung sehr einfach und schnell an der Aussenwand befestigbar ist.

Zudem ist ein besonders zuverlässiger Halt der Wärmedämmkörper untereinander und zugleich mit der Aussenwand geschaffen. Ausserdem ist die Befestigungsvorrichtung aufgrund des vereinfacht gehaltenen Aufbaus in Massenherstellung sehr einfach und kostengünstig herstellbar.

Vorzugsweise ist der Verbindungssteg dazu ausgebildet, bei vollständiger Ineingriffnahme in die Ausnehmung des zumindest einen ersten Wärmedämmkörpers, mit einer Oberseite des mindestens einen ersten Wärmedämmkörpers bündig abzuschliessen. Hierdurch ist gewährleistet, dass das Volumen der Aussparung so gering wie möglich gehalten wird. Somit wird so wenig wie möglich an Isolationsmaterial entnommen, welches insgesamt zur Verbesserung der Wärmeisolationseigenschaft beiträgt.

Vorzugsweise ist der Verbindungssteg dazu ausgebildet, bei vollständiger Ineingriffnahme in die Ausnehmung des zumindest einen ersten Wärmedämmkörpers, gegen eine Unterseite von der in den Wärmedämmkörper eingebrachten Ausnehmung anzuschlagen. Auch hierbei ist gewährleistet, dass das Volumen der Aussparung so gering wie möglich gehalten wird, indem so wenig wie möglich an Isolationsmaterial entnommen wird. Somit wird insgesamt eine hervorragende Wärmeisolationseigenschaft gewährleistet.

Vorzugsweise hat der Verbindungssteg eine Länge in einem Bereich zwischen 4 cm und 6 cm. Es besteht ein Vorteil darin, dass die Länge des Verbindungsstegs, respektive der Abstand von der Fixierplatte zu der hierzu parallel ausgerichteten Einsteckplatte, über eine Vielzahl von Befestigungsvorrichtungen, auch zur Befestigung unterschiedlicher Wärmedämmkörper, welche sich in Dicke, Material oder weiteren Eigenschaften unterscheiden, stets konstant sein kann. Dieser Vorteil bezieht sich respektive auch auf die konstante Position des ersten und/oder von weiteren Schlitzen, parallel in Relation zu der zu der Aussenwand hin ausgerichteten Kante des Wärmedämmkörpers, welche Schlitze in das Material des Wärmedämmkörpers einbringbar sind oder eingebracht sind. Analog hierzu besteht insgesamt ein Vorteil der Befestigungsvorrichtung darin, dass auch bei der Befestigung unterschiedlicher Wärmedämmkörper, welche sich in der Dicke, beispielsweise 80, mm, 100 mm, 120 mm, 140 mm oder 160 mm, usw., unterscheiden und/oder im Material, beispielsweise Polystyrol, Polyurethan, Glasschaum, Mineralwolle, usw., unterscheiden, stets Befestigungsvorrichtungen mit identischen Ausmassen herangezogen werden können. Dies steht im Gegensatz zu der Befestigung aus dem Stand der Technik mittels Thermodübel, welche bei unterschiedlicher Dicke der Wärmedämmkörper auch unterschiedlich lang ausgebildet sein müssen. Ein Vorteil der erfindungsgemässen Befestigungsvorrichtung besteht somit darin, dass diese mit nahezu unveränderten Ausmassen in Massenherstellung hergestellt werden kann, wodurch die Herstellungskosten der erfindungsgemässen Befestigungsvorrichtung insgesamt reduziert werden. Auch reduzieren sich in Hinblick hierauf die Kosten in Bezug auf Transport und Lagerhaltung.

Vorzugsweise ist die Einsteckplatte derart ausgebildet, dass, bei vollständiger Ineingriffnahme mit dem mindestens einen ersten Wärmedämmkörper, ein zweiter Abschnitt von der Einsteckplatte über eine Fläche des Wärmedämmkörpers vorragt. Durch diese Ausgestaltung kann die Befestigungsvorrichtung zugleich mehrere Wärmedämmkörper halten.

Weiter vorzugsweise ist der zweite Abschnitt von der Einsteckplatte zur relativen Ineingriffnahme in einen der Dicke von der Einsteckplatte im Wesentlichen korrespondierenden zweiten Schlitz von zumindest einem zweiten Wärmedämmkörper ausgebildet, welcher oberhalb oder unterhalb von dem ersten Wärmedämmkörper plazierbar ist. Es besteht ein Vorteil darin, dass die Befestigungsvorrichtung somit beispielsweise die Oberseite von einem ersten Wärmedämmkörper und zugleich die Unterseite von einem oberhalb davon angefügten zweiten Wärmedämmkörper halten kann. Hierdurch kann insgesamt die Anzahl notwendiger Befestigungsvorrichtungen zum Ausbilden eines Wärmedämmverbundsystems reduziert werden, welches Vorteile hinsichtlich einer reduzierten Montagezeit und verringerter Kosten mit sich bringt. Der erste und/oder zweite Schlitz können im Verlauf der Herstellung des Wärmedämmkörpers in das Material des Wärmedämmkörpers eingebracht werden. Alternativ können der erste und/oder zweite Schlitz an Ort und Stelle, beispielsweise auf der Baustelle, in das Material eingebracht werden.

Vorzugsweise ist der Verbindungssteg plattenförmig ausgebildet und zur relativen Ineingriffnahme in einen als Ausnehmung in den Wärmedämmkörper einbringbaren Schlitz ausgebildet, welcher senkrecht zum ersten Schlitz in den Wärmedämmkörper einbringbar ist. Durch diese Ausgestaltung ist eine zuverlässige Verbindung zwischen der Fixierplatte und der Einsteckplatte bei minimalem Materialaufwand gewährleistet. Insbesondere werden Kräfte, welche beim relativen Einführen der Einsteckplatte in den Schlitz des Wärmedämmkörpers oder beim Aufsetzen des Wärmedämmkörpers auf die Einsteckplatte der fixierten Befestigungsvorrichtung einwirken, direkt an die Fixierplatte überführt ohne dass sich der plattenförmige Verbindungssteg in Richtung der Krafteinwirkung verbiegt. Zudem lässt sich eine derart ausgebildete Befestigungsvorrichtung besonders einfach und kostengünstig herstellen. Der als Ausnehmung ausgebildete einbringbare Schlitz kann an Ort und Stelle mit Hilfe von einem Schneidwerkzeug in den Wärmedämmkörper eingebracht werden. Somit kann die Befestigungsposition der Befestigungsvorrichtung an der Aussenwand in horizontaler Richtung flexibel gewählt werden. Unterstützend zum Einbringen des als Ausnehmung ausgebildeten Schlitzes in den Wärmedämmkörper kann eine Schablone herangezogen werden.

Vorzugsweise schliessen, in einem an der Aussenwand fixierten Zustand der Befestigungsvorrichtung, die jeweilige Unterseite von der Fixierplatte und/oder dem plattenförmigen Verbindungssteg und/oder der Einsteckplatte zueinander bündig ab. Eine derartige Konstruktion gewährleistet einen reduzierten Material- und Zeitaufwand bei der Herstellung der Befestigungsvorrichtung.

Vorzugsweise entspricht der Abstand zwischen der Fläche von der Fixierplatte und der Fläche von der Einsteckplatte gleich der Länge der in den Wärmedämmkörper einbringbaren Ausnehmung. Durch diese Ausgestaltung wird sichergestellt, dass der Wärmedämmkörper im eingesetzten Zustand in die Befestigungsvorrichtung zwischen den planparallelen Flächen der Fixierplatte und der Einsteckplatte besonders zuverlässig und ohne Spiel gehalten wird.

Vorzugsweise ist, in einem an der Aussenwand fixierten Zustand, die Einsteckplatte an der Oberseite und/oder Unterseite mit dreieckförmigen Ausnehmungen ausgebildet. Beispielsweise können die Oberseite und/oder Unterseite durchgehend gezackt ausgebildet sein. Diese Ausgestaltung ermöglicht ein besonders einfaches und schnelles Einführen der Einsteckplatte in den ersten Schlitz des Wärmedämmkörpers, respektive ein besonders einfaches und schnelles Aufsetzen des ersten Schlitzes des Wärmedämmkörpers über die Einsteckplatte. Diese Ausgestaltung ermöglicht ferner das Einbringen von Markierungen auf die Oberfläche des Wärmedämmkörpers, indem die Befestigungsvorrichtung mit der gezackt ausgebildeten Oberseite und/oder Unterseite der Einsteckplatte vor der Montage an den Wärmedämmkörper gedrückt wird. Die jeweils gezackte Seite hinterlässt dann die Markierungen am Wärmedämmkörper, anhand derer die Position des in das Material des Wärmedämmkörpers einbringbaren ersten Schlitzes bestimmbar ist. Der Schlitz kann an Ort und Stelle mittels eines Messers mit beispielsweise geriffelter Schneide in das Material des Wärmedämmkörpers eingebracht werden. Alternativ kann der Schlitz im Verlauf der Herstellung des Wärmedämmkörpers in das Material eingebracht werden.

Vorzugsweise ist der Verbindungssteg, in einem an der Aussenwand fixierten Zustand, an der Unterseite mit dreieckförmigen Ausnehmungen ausgebildet. Beispielsweise kann die Unterseite des Verbindungsstegs, ähnlich der vorherigen Ausführungsform, durchgehend gezackt ausgebildet sein. Diese Ausgestaltung ermöglicht ein besonders einfaches und schnelles Einführen des Verbindungsstegs in die korrespondierende Ausnehmung des Wärmedämmkörpers. Diese Ausgestaltung ermöglicht ferner das Einbringen von Markierungen auf der Oberfläche des Wärmedämmkörpers, indem die Befestigungsvorrichtung mit der gezackt ausgebildeten Unterseite des Verbindungsstegs vor der Montage an den Wärmedämmkörper gedrückt wird. Die gezackte Unterseite hinterlässt dann Markierungen am Wärmedämmkörper, anhand derer die Position der in das Material des Wärmedämmkörpers einbringbaren Ausnehmung bestimmbar ist. Die Ausnehmung kann an Ort und Stelle mittels eines Messers mit beispielsweise geriffelter Schneide in das Material des Wärmedämmkörpers eingebracht werden.

Vorzugsweise ist die Fixierplatte mit zumindest einer Bohrung versehen, durch welche hindurch ein Fixierelement zur Fixierung an der Aussenwand einführbar ist. Hierdurch kann die Fixierplatte schnell, einfach und kostengünstig mittels beispielsweise einer Schrauben-Dübel-Anordnung oder eines Schlagdübels an der Aussenwand befestigt werden.

Vorzugsweise ist die Einsteckplatte mit Durchgangsbohrungen zur Abfuhr von durch Wasserdampfdiffusion gebildetem Wasserdampf versehen. Durch das Vorsehen der Durchgangsbohrungen wird das Ansammeln von Wasser innerhalb des Wärmedämmkörpers unterbunden.

Vorzugsweise ist die Befestigungsvorrichtung aus Metall oder Kunststoff erstellt. Bei einer Verwendung von Metall ist der Gebrauch von rostfreiem Stahl bevorzugt um somit der Bildung von Rost entgegenzutreten. Die Befestigungsvorrichtung kann vorteilhafterweise mittels Stanzen und Abkanten von einer entsprechend vorbereiteten Metallplatte hergestellt werden. Bei der Verwendung von Kunststoff als Material der Befestigungsvorrichtung ist eine lange Lebensdauer gewährleistet. Ferner sind die Materialkosten niedrig gehalten. Als Kunststoff zur Herstellung der Befestigungsvorrichtung kann beispielsweise Polykarbonat gewählt werden.

Vorzugsweise weist die Einsteckplatte der Befestigungsvorrichtung eine Länge zwischen 8 cm und 12 cm auf und eine Breite zwischen 4 cm und 6 cm auf. Eine Einsteckplatte mit solchen Ausmassen hat sich in Bezug auf den Materialeinsatz als besonders vorteilhaft erwiesen. Es sind selbstverständlich Befestigungsvorrichtungen mit Einsteckplatten vorstellbar, welche andere Ausmasse haben.

Vorzugsweise ist der Verbindungssteg mittig zur Einsteckplatte mit dieser verbunden. Ein solch symmetrischer Aufbau gewähreistet günstige Herstellungskosten.

Alternativ vorzugsweise ist der Verbindungssteg zwischen 1 cm und 2 cm zur Mitte der Einsteckplatte versetzt mit dieser verbunden. Eine derartige Ausgestaltung trägt dem Umstand Rechnung, nach welchem vermieden werden sollte, dass der Verbindungssteg der Befestigungsvorrichtung inmitten von zwei horizontal benachbarten Wärmedämmkörpern positioniert wird. Es ist vielmehr bevorzugt, dass der Verbindungssteg links oder rechts von einem Wärmedämmkörper mit einem Abstand von mindestens 1 cm von der Seitenkante des Wärmedämmkörpers entfernt in eine jeweils korrespondierende Ausnehmung eingebracht wird. Hierdurch wird vermieden, dass die jeweils horizontal zueinander benachbarten Wärmedämmkörper bei einer Distanz entsprechend der Dicke des Materials des Verbindungsstegs beabstandet sind, welche Beabstandung eine Kältebrücke bilden würde. Unter Einhaltung des Vorherigen sind die Wärmedämmkörper auch in horizontaler Ausrichtung stets nahtlos zueinander angeordnet, welches eine zufriedenstellende Isolierung garantiert. Durch die zuvor genannte Positionierung einzelner Befestigungsvorrichtungen nahe der Seitenkannte eines jeweiligen Wärmedämmkörpers kann eine einzelne Befestigungsvorrichtung in bevorzugter Weise die Eckbereiche von drei einzelnen Wärmedämmkörpern halten, welche in horizontaler Reihe zueinander versetzt angeordnet sind. Unter Berücksichtigung dieser Anordnungsweise kann die Anzahl der notwendigen Befestigungsvorrichtungen reduziert werden. Hierdurch werden Kosten und Montagezeit reduziert. Im Hinblick auf das Vorherige ist es bevorzugt, den Verbindungssteg zwischen 1 cm und 2 cm zur Mitte der Einsteckplatte versetzt mit dieser zu verbinden. Hierdurch sind auch bei der zur Seitenkante eines Wärmedämmkörpers versetzten Anordnung der Befestigungsvorrichtung gleichzeitig identisch lange Abschnitte der Einsteckplatte der einzelnen Befestigungsvorrichtung in zwei zueinander horizontal benachbarte Wärmedämmkörper eingebracht. Hierdurch kann insgesamt eine bestmögliche Befestigung erzielt werden.

Die zuvor genannte Aufgabe wird zudem durch einen Wärmedämmkörper nach Patentanspruch 18 gelöst. Der Wärmedämmkörper kann beispielsweise an seiner Oberseite und/oder Unterseite mit einem Schlitz vorbereitet sein. Die Ausnehmung zur Aufnahme des Verbindungsstegs kann beispielsweise in situ, an Ort und Stelle der Montage, in den Wärmedämmkörper eingebracht werden. Alternativ kann der Schlitz im Zuge der Herstellung des Wärmedämmkörpers in diesen eingebracht werden. Vorzugsweise ist der Wärmedämmkörper aus synthetisch organischen Dämmstoffen, insbesondere Polystyrol-Hartschaum, Polystyrolpartikel-Schaum, Polystyrolextruder-Schaum, Polyurethan-Hartschaum und dergleichen, oder aus synthetisch anorganischen Dämmstoffen, insbesondere Mineralwolle, Mineralschaum, Schaumglas und dergleichen, hergestellt. Diese Materialien bieten hervorragende Wärmeisolationseigenschaften. Der Wärmedämmkörper kann ferner zusätzlich oder alternativ zur Schalldämmung ausgebildet sein. Ferner sind Wärmedämmkörper mit einer Beschichtung verwendbar. Der Vorteil der Erfindung kommt insbesondere bei Wärmedämmkörpern mit Beschichtung und bei Wärmedämmkörpern mit einem Material aus Schaumglas zum Tragen. Insbesondere diese Wärmedämmkörper kommen aufgrund ihrer hervorragenden Wärmeisolationseigenschaft bzw. ihrer im Vergleich zu herkömmlichen Wärmedämmkörpern reduzierten Dicke vermehrt zum Einsatz. Diese Wärmedämmkörper sollten bzw. dürfen jedoch nicht durchbohrt werden, beispielsweise zum Durchstecken eines Thermodübels aus dem Stand der Technik, wie zuvor beschrieben. Ein Durchbohren eines Wärmedämmkörpers mit einer Beschichtung würde die Wärmeisolationseigenschaft dieses Wärmedämmkörpers drastisch reduzieren. Ein Durchbohren eines Wärmedämmkörpers mit einem Material aus Schaumglas würde unweigerlich dessen Zerstörung hervorrufen. Die vorliegende Erfindung erlaubt hingegen eine zuverlässige Befestigung von Wärmedämmkörpern ohne diese durchbohren zu müssen. Somit werden die oben aufgeführten Nachteile aus dem Stand der Technik vorteilhafterweise umgangen.

Die zuvor genannte Aufgabe wird zudem durch ein Wärmedämmverbundsystem nach Patentanspruch 20 gelöst. Ein derartiges Wärmedämmverbundsystem kann schnell und einfach mit geringen Kosten an der Aussenwand und/oder Innenwand und/oder Decke (Unterschicht) eines Gebäudes angebracht werden. Gleichzeitig gewährleistet das Wärmedämmverbundsystem eine hervorragende Wärmeisolationseigenschaft. Somit können die Heizenergiekosten des Gebäudes reduziert werden.

Vorzugsweise enthält das Wärmedämmverbundsystem ferner wenigstens ein Isolationselement, welches in einem Bereich zwischen übereinander und/oder nebeneinander angeordneten Wärmedämmkörpern und der Aussenwand positioniert ist. Hierdurch wird durch die wechselweise angeordneten Isolationselemente eine Luftzirkulation in einem Bereich (Hohlraum) zwischen den Wärmedämmkörpern und der Aussenwand unterbunden. Ein Vorteil besteht darin, dass die Wärmeisolationseigenschaft somit weiter verbessert wird. Ein weiterer Vorteil besteht darin, dass im Falle eines Brandes nur vermindert Sauerstoff an den Brandherd zugeführt wird und zudem das Entweichen giftiger Dämpfe reduziert wird.

Vorzugsweise ist das Isolationselement aus einem schlauchförmigen elastischen Material erstellt, welches dazu ausgelegt ist, in einem Zwischenraum zwischen dem Wärmedämmkörper und der Aussenwand des Gebäudes elastisch eingespannt zu werden. Ein Vorteil dieser Ausführungsform besteht darin, dass das Isolationselement alleine durch Klemmkraft selbsthaltend ist. Zudem können jederzeit Nachjustierungen vorgenommen werden.

Alternativ vorzugsweise ist das Isolationselement aus einem elastischen Material erstellt, welches an zumindest einer Seite mit einer Klebefläche versehen ist, wobei das Isolationselement dazu ausgelegt ist, über die Klebefläche mit einer der Aussenwand des Gebäudes zugewandten Fläche des Wärmedämmkörpers verklebt zu werden. Ein Vorteil dieser Ausführungsform besteht darin, dass das Isolationselement schon im Vorfeld der Montage der Wärmedämmkörper an diese geklebt werden kann. Beispielsweise kann das Isolationselement entlang der Kantenbereiche der einzelnen Wärmedämmkörper verklebt werden.

Vorzugsweise enthält das Wärmedämmverbundsystem ferner einen Unterlegkeil, welcher dazu ausgelegt ist, zwischen der Fixierplatte und der Aussenwand des Gebäudes zwischengesetzt zu werden und einen Winkel zwischen der Fixierplatte und der Aussenwand des Gebäudes einzustellen. Somit können die Befestigungsvorrichtungen voneinander separat exakt positioniert und ausgerichtet werden, so dass später die Aussenflächen der einzelnen Wärmedämmkörper zueinander stets bündig sind. Zudem wird ein Verkanten von einzelnen Wärmedämmkörpern zueinander vermieden, welches die Wärmeisolationseigenschaft des gesamten Wärmedämmverbundsystems herabsetzen würde.

Die zuvor genannte Aufgabe wird zudem durch ein Gebäude nach Patentanspruch 25 gelöst. Ein mit einem Wärmedämmverbundsystem nach einem der Patentansprüche 20 bis 24 wärmeisoliertes Gebäude hat eine hervorragende Wärmeisolationseigenschaft, welche bei nur geringem Materialeinsatz, in kurzer Zeit und mit geringen Kosten geschaffen ist. Hierdurch kann das Gebäude mit reduziertem Energieeintrag geheizt werden, da die Wärme innerhalb des Gebäudes nur sehr vermindert über die Aussenwände an die Umgebung entweicht. Hierdurch werden Kosten eingespart und massgebliche Energieeinspar-Richtlinien, beispielsweise Richtlinien im Hinblick auf die Minergie-Bauweise, erfüllt.

Die zuvor genannte Aufgabe wird zudem durch ein Verfahren zum Erstellen eines Wärmedämmverbundsystems nach Anspruch 26 gelöst. Bei diesem Verfahren wird die Ausnehmung an Ort und Stelle, beispielsweise auf der Baustelle, in den Wärmedämmkörper eingebracht. Hierzu kann eine vorbereitete Schablone unterstützen, welche, an den Wärmedämmkörper angesetzt, zur Führung eines Messers dienen kann, mit welchem ein als Ausnehmung ausgebildeter Schlitz in das Material des Wärmedämmkörpers eingebracht wird. Alternativ kann die Ausnehmung bereits im Verlauf der Herstellung des Wärmedämmkörpers in das Material davon eingebracht sein. Die derart vorbereiteten Wärmedämmkörper werden dann mit Hilfe der Befestigungsvorrichtungen, welche mit den Wärmedämmkörpern relativ in Eingriff bringbar sind, an der Aussenwand des Gebäudes befestigt.

Im Folgenden wird die Erfindung anhand eines Ausführungsbeispiels näher erläutert. Hierbei zeigen:
- Figur 1: eine Befestigungsvorrichtung in Perspektivansicht;
- Figur 2: einen Ausschnitt von einem Wärmedämmkörper, welcher durch eine Befestigungsvorrichtung an der Aussenwand von einem Gebäude fixiert ist; und
- Figur 3: einen Ausschnitt von einem an der Aussenwand eines Gebäudes befestigten Wärmedämmverbundsystem.

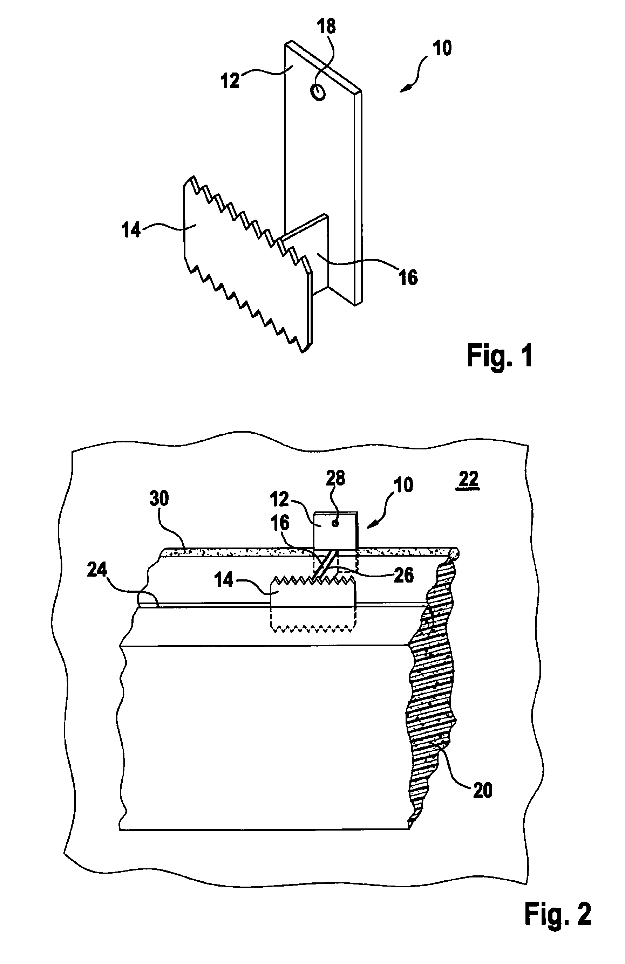

Figur 1 zeigt eine Befestigungsvorrichtung 10 in Perspektivansicht. Die Befestigungsvorrichtung 10 enthält eine Fixierplatte 12 zum Fixieren der Befestigungsvorrichtung 10 an einer Aussenwand eines Gebäudes (nicht gezeigt). Eine Einsteckplatte 14 ist über einen Verbindungssteg 16 mit der Fixierplatte 12 verbunden, wobei die Platten 12, 14 zueinander planparallel angeordnet sind. Die Einsteckplatte 14 dient zur relativen Ineingriffnahme, zumindest abschnittsweise, in einen Schlitz, welcher in einem Wärmedämmkörper (beide nicht gezeigt) eingebracht ist. Somit können die Einsteckplatte 14 und der Schlitz relativ zueinander in Eingriff gebracht werden.

Unter dem Begriff "relative Ineingriffnahme" ist hierbei einerseits zu verstehen, dass die Einsteckplatte 14 in den Schlitz eines (statischen) Wärmedämmkörpers eingeführt werden kann. Andererseits ist unter diesem Begriff zu verstehen, dass ein Wärmedämmkörper über seinen Schlitz auf die (statische) Einsteckplatte 14 aufgesetzt werden kann.

Die Fixierplatte 12 enthält eine Bohrung 18, durch welche hindurch ein Fixierelement (nicht gezeigt) zur Fixierung an der Aussenwand einführbar ist. Die relative Ineingriffnahme zwischen dem Schlitz eines jeweiligen Wärmedämmkörpers und der Einsteckplatte 14 wird ferner unterstützt, indem die untere und/oder obere Längsseite der Einsteckplatte 14 gezackt ausgebildet ist bzw. sind.

Figur 2 zeigt schematisch einen Ausschnitt von einem Wärmedämmkörper 20, welcher durch die in Figur 1 gezeigte Befestigungsvorrichtung 10 an einer Aussenwand 22 von einem Gebäude fixiert ist. An der Oberseite des Wärmedämmkörpers 20 ist ein in Längsrichtung verlaufender Schlitz 24 in das Material des Wärmedämmkörpers 20 eingebracht. In den Schlitz 24 ist ein unterer (erster) Abschnitt der Einsteckplatte 14 eingesetzt. Die Dicke des Schlitzes 24 korrespondiert hierbei mit der Dicke der Einsteckplatte 14. Hierdurch wird ein fester Halt zwischen der Befestigungsvorrichtung 10 und dem Wärmedämmkörper 20 gewährleistet.

Der Verbindungssteg 16 ist wiederum vollständig in eine Ausnehmung 26 des Wärmedämmkörpers 20 eingesetzt, welche in den Wärmedämmkörper 20 eingebracht ist oder an Ort und Stelle einbringbar ist. Hierbei ragt keinerlei Abschnitt des Verbindungssteges 16 oberhalb von der Oberseite des Wärmedämmkörpers 20 hervor. Somit wird vermieden, dass ein Spalt zwischen diesem Wärmedämmkörper 20 und einem oberhalb davon zu platzierenden weiteren Wärmedämmkörper (nicht gezeigt) gebildet wird. Mit anderen Worten wird somit sichergestellt, dass sich übereinander angeordnete Wärmedämmkörper zueinander nahtlos, ohne einen jeglichen Spalt, anschliessen. Diese Anordnung garantiert hervorragende Wärmeisolationseigenschaften.

Als ein Beispiel kann der Verbindungssteg 16 als ein plattenförmiger Körper ausgebildet sein, dessen untere Seite mit der unteren Seite von der Einsteckplatte 14 bündig abschliesst. In diesem Beispiel ist die Ausnehmung 26 als ein Schlitz ausgebildet, dessen Dicke mit der Dicke des plattenförmigen Verbindungssteges 16 übereinstimmt. In diesem Beispiel sind ferner dieser Schlitz (Ausnehmung 26) und der Schlitz 24 identisch tief in das Material des Wärmedämmkörpers 20 eingebracht. Ferner schliesst die obere Seite des Verbindungsstegs 16 bündig mit der Oberseite des Wärmedämmkörpers 20 ab. Somit ist der Materialabtrag für die Ausnehmung 26 auf das Minimum reduziert, wodurch die Wärmeisolationseigenschaft maximiert wird. Zusätzlich wird ein fester Halt zwischen der Befestigungsvorrichtung 10 und dem Wärmedämmkörper 20 gewährleistet.

Der in den Wärmedämmkörper 20 als Ausnehmung 26 eingebrachte Schlitz erstreckt sich durchgängig vom Schlitz 24 zu jener Fläche des Wärmedämmkörpers 20, welche im montierten Zustand der Aussenwand 22 zugewandt ist. Die Länge des als Ausnehmung 26 eingebrachten Schlitzes entspricht hierbei dem Abstand zwischen den Flächen der Einsteckplatte 14 und der Fixierplatte 12. Somit sind Materialabschnitte der Oberseite des Wärmedämmkörpers 20 fest zwischen der Einsteckplatte 14 und der Fixierplatte 12 eingespannt. Hierdurch wird ein weiterer fester Halt zwischen der Befestigungsvorrichtung 10 und dem Wärmedämmkörper 20 gewährleistet.

Wie in der Figur schematisch gezeigt, steht der untere (erste) Abschnitt der Einsteckplatte 14 mit dem Schlitz 24 des Wärmedämmkörpers 20 in Eingriff. Ein oberer (zweiter) Abschnitt der Einsteckplatte 14 ragt über die Oberseite dieses Wärmedämmkörpers 20 hervor. Dieser obere Abschnitt der Einsteckplatte 14 kann wiederum mit einem Schlitz eines weiteren Wärmedämmkörpers (beide nicht gezeigt) in Eingriff gebracht werden, welcher oberhalb des Wärmedämmkörpers 20 zu platzieren ist. Durch diese Funktion der doppelten Ineingriffnahme kann insgesamt die Anzahl notwendiger Befestigungsvorrichtungen reduziert werden. Hierdurch werden Montagezeit und Kosten gespart. Zur Befestigung einer unteren (ersten) Lage von Wärmedämmkörpern kann vorgesehen sein, dass diese Wärmedämmkörper jeweils an Ihrer Bodenseite ebenfalls mit einer Ausnehmung zur Aufnahme eines Verbindungsstegs und einem Schlitz zur Aufnahme einer Einsteckplatte von einer Befestigungsvorrichtung bereitgestellt sind. Hierbei sind lediglich diese am Bodenbereich der Aussenwand zu montierenden Befestigungsvorrichtungen derart ausgestaltet, dass die Ober- und Unterseite der Einsteckplatte mit der Ober- und Unterseite des Verbindungsstegs bündig abschliessen.

Wie in Figuren 1 und 2 zu erkennen, sind die obere und untere Längsseite von der Einsteckplatte 14 gezackt ausgeformt. Durch diese Ausgestaltung wird die relative Ineingriffnahme zwischen den Schlitzen von jeweiligen Wärmedämmkörpern und der Einsteckplatte 14 erleichtert. Durch die gezackte Ausformung greifen die Zacken in das zumeist elastische Material des Wärmedämmkörpers ein und sichern diesen somit zuverlässiger gegen eine Längsverschiebung in horizontaler Richtung. Die Fixierplatte 12 ist ferner mit einer Bohrung (in Figur 1 gezeigt) versehen, durch welche ein Fixierelement 28 zur Fixierung an der Aussenwand 22 gesteckt ist.

In einem Bereich zwischen übereinander angeordneten Wärmedämmkörpern und der Aussenwand 22 ist wenigstens ein Isolationselement 30 positioniert. Dieses Isolationselement 30 kann aus einem elastischen und porösen Material, beispielsweise Schaumstoff, erstellt sein, welches sich gut in den zuvor genannten Bereich einfügen lässt und eine Luftzirkulation in dem Bereich zwischen den Wärmedämmkörpern und der Aussenwand reduziert. Somit wird die Wärmeisolationseigenschaft erhöht. Ferner wird im Falle eines Feuers die Zufuhr von Sauerstoff an den Brandherd unterbunden. Zusätzlich wird das Austreten von giftigen Dämpfen verhindert. Beispielsweise kann das Isolationselement 30 schlauchförmig ausgebildet sein, welcher Schlauch elastisch eingespannt zwischen dem jeweiligen Wärmedämmkörper 30 und der Aussenwand 22 eingeklemmt wird. Alternativ kann das Isolationselement 30 mit einer Klebefläche versehen sein, mittels derer das Isolationselement 30 an die Rückseite des jeweiligen Wärmedämmkörpers 20 verklebt wird. Bei beiden Ausgestaltungen ist darauf zu achten, dass das Isolationselement 30 an der Befestigungsposition von der Fixierplatte 12 an der Aussenwand 22 unterbrochen ist.

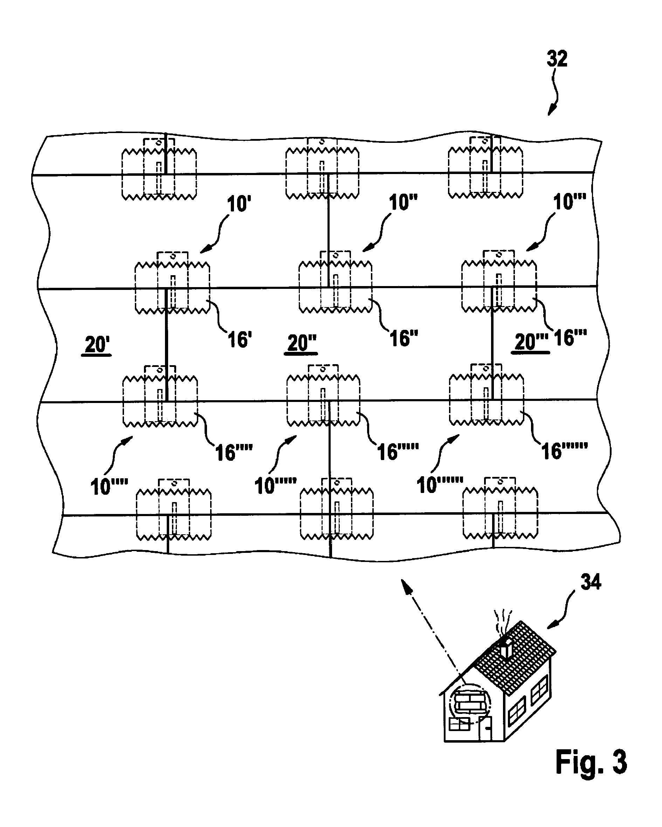

Figur 3 zeigt einen schematischen Ausschnitt eines Wärmeverbundsystems 32, welches an der Aussenwand eines Gebäudes 34 montiert ist. Wie zu erkennen, sind die einzelnen Wärmedämmkörper, welche quaderförmig ausgebildet sind, jeweils zueinander in Längsrichtung ausgerichtet angeordnet. Die jeweils direkt über- und untereinander angeordneten Wärmedämmkörper sind hierbei zueinander versetzt angeordnet. Hierdurch wird vermieden, dass sich eine durchgängige vertikale Fuge bildet, welche die Wärmeisolationseigenschaft des Wärmeverbundsystems 32 herabsetzten würde. Obwohl durch Wärmedämmmaterial verdeckt, sind Befestigungsvorrichtungen 10' - 10 " " " schematisch angezeigt, welche jeweils nebeneinander angeordnete Wärmedämmkörper 20', 20 " und 20''' und zugleich oberhalb und unterhalb davon angeordnete Wärmedämmkörper in Eingriff nehmen und an der Aussenwand befestigen.

Wie beispielsweise in der Figur gezeigt, sind drei Befestigungsvorrichtungen 10', 10'' und 10''' in Relation zu einem Wärmedämmkörper 20'' an einem oberen Randbereich davon positioniert und sind drei Befestigungsvorrichtungen 10ʺʺ, 10ʺʺʹ und 10ʺʺʺ in Relation zu dem Wärmedämmkörper 20ʺ an einem unteren Randbereich davon positioniert. Durch diese Anordnung wird die Anzahl notwendiger Befestigungsvorrichtungen weiter reduziert.

Bei der Anordnung zwischen den Befestigungsvorrichtungen 10' - 10ʺʺʺ und den Wärmedämmkörpern 20 ' , 20ʺ und 20''' in Relation zueinander ist zu vermeiden, dass der Verbindungssteg 16', 16''', 16ʺ und 16''''''der jeweiligen Befestigungsvorrichtungen 10', 10ʺʹ, 10'''' und 10'''''' innerhalb der Nahtstelle (Fuge) zwischen nebeneinander benachbarten Wärmedämmkörpern 20', 20'' und 20''' positioniert wird. Somit wird sichergestellt, dass sich auch nebeneinander angeordnete Wärmedämmkörper zueinander nahtlos, ohne einen jeglichen Spalt, anfügen, welches eine gute Wärmeisolationseigenschaft sicherstellt.

Das Wärmedämmverbundsystem 32 ist schnell und einfach bei reduzierten Kosten zu montieren und bietet zugleich besonders hervorragende Wärmeisolationseigenschaften, da die einzelnen Wärmedämmkörper zueinander nahtlos, ohne einen jeglichen Spalt, angefügt sind. Somit können die Heizenergiekosten des Gebäudes 34 reduziert werden.

## Patentansprüche

1. Befestigungsvorrichtung (10) zum Befestigen von Wärmedämmkörpern (20) an einer Aussenwand (22) eines Gebäudes (34), mit:
einer Fixierplatte (12) zum Fixieren der Befestigungsvorrichtung (10) an der Aussenwand (22);
einer Einsteckplatte (14), welche über einen Verbindungssteg (16) in einer Ebene im Wesentlichen parallel zur Fixierplatte (12) an dieser befestigt ist, wobei zumindest ein erster Abschnitt von einer Einsteckplatte (14) zur relativen Ineingriffnahme in einen der Dicke von der Einsteckplatte (14) im Wesentlichen korrespondierenden ersten Schlitz (24) von zumindest einem ersten der Wärmedämmkörper (20) ausgebildet ist;
**dadurch gekennzeichnet, dass**
der Verbindungssteg (16) zur relativen Ineingriffnahme in eine korrespondierende Ausnehmung (26) des zumindest einen ersten Wärmedämmkörpers (20) ausgebildet ist.

2. Befestigungsvorrichtung (10) nach Anspruch 1, bei welcher der Verbindungssteg (16) dazu ausgebildet ist, bei vollständiger Ineingriffnahme in die Ausnehmung (26) des zumindest einen ersten Wärmedämmkörpers (20), mit einer Oberseite des mindestens einen ersten Wärmedämmkörpers (20) bündig abzuschliessen.

3. Befestigungsvorrichtung (10) nach Anspruch 1 oder 2, bei welcher der Verbindungssteg (16) dazu ausgebildet ist, bei vollständiger Ineingriffnahme in die Ausnehmung (26) des zumindest einen ersten Wärmedämmkörpers (20), gegen eine Unterseite von der in den Wärmedämmkörper (20) eingebrachten Ausnehmung (26) anzuschlagen.

4. Befestigungsvorrichtung (10) nach einem der vorhergehenden Ansprüche, bei welcher der Verbindungssteg (16) eine Länge in einem Bereich zwischen 4 cm und 6 cm hat.

5. Befestigungsvorrichtung (10) nach einem der vorhergehenden Ansprüche, bei welcher die Einsteckplatte (14) derart ausgebildet ist, dass, bei vollständiger Ineingriffnahme mit dem mindestens einen ersten Wärmedämmkörper (20), ein zweiter Abschnitt von der Einsteckplatte (14) über eine Fläche des Wärmedämmkörpers (20) vorragt.

6. Befestigungsvorrichtung (10) nach Anspruch 5, bei welcher der zweite Abschnitt von der Einsteckplatte (14) zur relativen Ineingriffnahme in einen der Dicke von der Einsteckplatte (14) im Wesentlichen korrespondierenden zweiten Schlitz von zumindest einem zweiten Wärmedämmkörper ausgebildet ist, welcher oberhalb oder unterhalb von dem ersten Wärmedämmkörper (20) plazierbar ist.

7. Befestigungsvorrichtung (10) nach einem der vorhergehenden Ansprüche, bei welcher der Verbindungssteg (16) plattenförmig ausgebildet ist und zur relativen Ineingriffnahme in einen als Ausnehmung (26) in den Wärmedämmkörper einbringbaren Schlitz ausgebildet ist, welcher senkrecht zum ersten Schlitz (24) in den Wärmedämmkörper (20) einbringbar ist.

8. Befestigungsvorrichtung (10) nach Anspruch 7, bei welcher, in einem an der Aussenwand (22) fixierten Zustand, die jeweilige Unterseite von der Fixierplatte und/oder dem plattenförmigen Verbindungssteg (16) und/oder der Einsteckplatte (14) zueinander bündig abschliessen.

9. Befestigungsvorrichtung (10) nach einem der vorhergehenden Ansprüche, bei welcher der Abstand zwischen der Fläche von der Fixierplatte (12) und der Fläche von der Einsteckplatte (14) gleich der Länge der in den Wärmedämmkörper (20) einbringbaren Ausnehmung (26) entspricht.

10. Befestigungsvorrichtung (10) nach einem der vorhergehenden Ansprüche, bei welcher die Einsteckplatte (14), in einem an der Aussenwand (22) fixierten Zustand, an der Oberseite und/oder Unterseite mit dreieckförmigen Ausnehmungen ausgebildet ist.

11. Befestigungsvorrichtung (10) nach einem der vorhergehenden Ansprüche, bei welcher der Verbindungssteg (16), in einem an der Aussenwand (22) fixierten Zustand, an der Unterseite mit dreieckförmigen Ausnehmungen ausgebildet ist.

12. Befestigungsvorrichtung (10) nach einem der vorhergehenden Ansprüche, bei welcher die Fixierplatte (14) mit zumindest einer Bohrung (18) versehen ist, durch welche hindurch ein Fixierelement (28) zur Fixierung an der Aussenwand (22) einführbar ist.

13. Befestigungsvorrichtung (10) nach einem der vorhergehenden Ansprüche, bei welcher die Einsteckplatte (14) mit Durchgangsbohrungen zur Abfuhr von durch Wasserdampfdiffusion gebildetem Wasserdampf versehen ist.

14. Befestigungsvorrichtung (10) nach einem der vorhergehenden Ansprüche, welche aus Metall oder Kunststoff erstellt ist.

15. Befestigungsvorrichtung (10) nach einem der vorhergehenden Ansprüche, bei welcher die Einsteckplatte (14) eine Länge zwischen 8 cm und 12 cm aufweist und eine Breite zwischen 4 cm und 6 cm aufweist.

16. Befestigungsvorrichtung (10) nach einem der vorhergehenden Ansprüche, bei welcher der Verbindungssteg (16) mittig zur Einsteckplatte (14) mit dieser verbunden ist.

17. Befestigungsvorrichtung (10) nach einem der Ansprüche 1 bis 15, bei welcher der Verbindungssteg (16) zwischen 1 cm und 2 cm zur Mitte der Einsteckplatte (14) versetzt mit dieser verbunden ist.

18. Wärmedämmkörper (20) mit zumindest einem ersten Schlitz (24) und zumindest einer in den Wärmedämmkörper (20) einbringbaren Ausnehmung (26), welche zur relativen Ineingriffnahme mit wenigstens einer Befestigungsvorrichtung (10) nach einem der Ansprüche 1 bis 17 ausgebildet sind.

19. Wärmedämmkörper (20) nach Anspruch 18, welcher aus synthetisch organischen Dämmstoffen, insbesondere Polystyrol-Hartschaum, Polystyrolpartikel-Schaum, Polystyrolextruder-Schaum, Polyurethan-Hartschaum und dergleichen, oder aus synthetisch anorganischen Dämmstoffen, insbesondere Mineralwolle, Mineralschaum, Schaumglas und dergleichen, hergestellt ist.

20. Wärmedämmverbundsystem (32) mit einer Mehrzahl von übereinander und nebeneinander angeordneten Wärmedämmkörpern (20) nach Anspruch 18 oder 19 und einer Mehrzahl von Befestigungsvorrichtungen (10) nach einem der Ansprüche 1 bis 17, zum Fixieren der Wärmedämmkörper (20) an der Aussenwand (22) eines Gebäudes (34).

21. Wärmedämmverbundsystem (32) nach Anspruch 20, ferner mit wenigstens einem Isolationselement (30), welches in einem Bereich zwischen übereinander und/oder nebeneinander angeordneten Wärmedämmkörpern (20) und der Aussenwand (22) positioniert ist.

22. Wärmedämmverbundsystem (32) nach Anspruch 21, bei welchem das Isolationselement (30) aus einem schlauchförmigen elastischen Material erstellt ist, welches dazu ausgelegt ist, in einem Zwischenraum zwischen dem Wärmedämmkörper (20) und der Aussenwand (22) des Gebäudes (34) elastisch eingespannt zu werden.

23. Wärmedämmverbundsystem (32) nach Anspruch 21, bei welchem das Isolationselement (30) aus einem elastischen Material erstellt ist, welches an zumindest einer Seite mit einer Klebefläche versehen ist, wobei das Isolationselement (30) dazu ausgelegt ist, mittels der Klebefläche mit einer der Aussenwand (22) des Gebäudes (34) zugewandten Fläche des Wärmedämmkörpers (20) verklebt zu werden.

24. Wärmedämmverbundsystem (32) nach einem der Ansprüche 20 bis 23, ferner mit einem Unterlegkeil, welcher dazu ausgelegt ist, zwischen der Fixierplatte (12) und der Aussenwand (22) des Gebäudes (34) zwischengesetzt zu werden und einen Winkel zwischen der Fixierplatte (12) und der Aussenwand (22) des Gebäudes (34) einzustellen.

25. Gebäude (34) mit einem Wärmedämmverbundsystem (32) nach einem der Ansprüche 20 bis 24.

26. Verfahren zum Erstellen eines Wärmedämmverbundsystems (32) nach einem der Ansprüche 20 bis 24 mit den Schritten:
Einbringen von einer Ausnehmung (26) in zumindest einen Wärmedämmkörper (20) nach Anspruch 18 oder 19;
Befestigen des zumindest einen Wärmedämmkörpers (20) an einer Aussenwand (22) eines Gebäudes (34) mittels einer mit dem Wärmedämmkörper (20) relativ in Eingriff gebrachten Befestigungsvorrichtung (10) nach einem der Ansprüche 1 bis 17.
